# EUROPÄISCHE PATENTSCHRIFT

(11) **EP 2 710 287 B1**
(45) Veröffentlichungstag und Bekanntmachung des Hinweises auf die Patenterteilung: **01.07.2015**
(21) Anmeldenummer: 11810807.5
(22) Anmeldetag: 23.12.2011
(51) Int. Cl.: F16L 11/00, F16L 33/22, F16L 33/207

(54) **SCHLAUCHVERBINDUNGSANORDNUNG**
HOSE CONNECTION ASSEMBLY
ENSEMBLE RACCORD DE TUYAU FLEXIBLE

(30) Priorität: 17.05.2011 DE 202011100788 U
(43) Veröffentlichungstag der Anmeldung: 26.03.2014
(73) Patentinhaber: Neoperl GmbH, 79379 Müllheim (DE)
(72) Erfinder: KURY, Werner, 79379 Müllheim (DE)
(74) Vertreter: Börjes-Pestalozza, Henrich
(86) Internationale Anmeldenummer: PCT/EP2011/006557
(87) Internationale Veröffentlichungsnummer: WO 2012/155943

(56) Entgegenhaltungen:
- DE-A1- 2 907 813
- US-A- 4 303 263

## Beschreibung

Die Erfindung betrifft eine Schlauchanordnung für ein wasserführendes System, mit einem flexiblen Druckschlauch und einem an einem Schlauchende des Druckschlauchs angeordneten Anschlussstück, wobei das Anschlussstück zumindest einen in den Druckschlauch eingreifenden Schlauchnippel und eine den Druckschlauch außenseitig umgreifende Quetschhülse aufweist und wobei der Druckschlauch zwischen dem Schlauchnippel und der Quetschhülse kraft- und/oder formschlüssig gehalten ist, wobei die Quetschhülse den Schlauchnippel an dessen schlauchseitigem Nippelende in Erstreckungsrichtung des Druckschlauches mit einem Hülsenabschnitt überragt, und wobei die Quetschhülse in dem Hülsenabschnitt einen radial nach innen gerichteten Vorsprung bildet, welcher den Druckschlauch derart radial beaufschlagt und verdrängt, dass der lichte Innendurchmesser des Druckschlauchs im Bereich des Hülsenabschnitts gegenüber dem lichten Innendurchmesser des entspannten Druckschlauchs an den lichten Innendurchmesser des Schlauchnippels angenähert oder angeglichen ist.

Derartige Schlauchanordnungen sind bekannt und haben sich vielfach beim Einsatz in druckbeaufschlagten, wasserführenden Systemen bewährt. Für den Schlauchnippel ist auch die Bezeichnung "Fitting" gebräuchlich, während für die Quetschhülse auch die Bezeichnung "Crimphülse" Verwendung findet, wenn der Druckschlauch durch Vercrimpung der Quetschhülse auf dem Schlauchnippel gehalten wird.

Aus der US 4 303 263 A ist eine Schnellkupplung zum Verbinden einer Fluidleitung mit einer mehrschichtigen flexiblen Schlauchleitung vorbekannt. Die vorbekannte Schnellkupplung hat ein Kupplungsteil mit einer zur Durchflussleitung koaxialen Einsetzöffnung. In dieser Einsetzöffnung ist ein Einsatz eingesetzt, der an seinem dem Kupplungsteil abgewandten Endbereich einen Schlauchnippel trägt, auf den das eine Schlauchende des mehrschichtigen flexiblen Schlauches aufgeschoben werden kann. Das Kupplungsteil weist ein Außengewinde auf, auf das eine hülsenförmige Kupplungsmuffe mit einem Innengewinde aufgeschraubt werden kann. In der Kupplungsmuffe ist ein Haltering vorgesehen, dessen Ringöffnung sich in Richtung zum Kupplungsteil derart konisch erweitert, dass die am Innenumfang des Halterings ergriffene Schlauchleitung beim Aufschieben der Kupplungsmuffe auf das Kupplungsteil mit ihrem Schlauchende ebenfalls zunehmend auf den Schlauchnippel aufgeschoben und dort gesichert gehalten wird.

Die aus US 4 303 263 A vorbekannte Schnellkupplung erlaubt die bei Bedarf auch rasch lösbare Verbindung des Schlauchendes einer flexiblen Schlauchleitung auf dem Schlauchnippel der Schnellkupplung, da bei der vorbekannten Schnellkupplung auf eine vercrimpbare Quetschhülse verzichtet wird. Nachteilig ist jedoch der komplexe Aufbau dieser Schnellkupplung mit ihren vielen, aufeinander abgestimmten Bestandteilen, der ein entsprechend hohes Gewicht und einen größeren Durchmesser der Schnellkupplung zur Folge hat. Bei sanitären Schlauchleitungen werden jedoch häufig kompakte, einfach aufgebaute und entsprechend platzsparende Schlauchanordnungen bevorzugt, die auch den Einsatz unter beengten Platzverhältnissen beispielsweise auf der Unterseite eines Waschbeckens im Bereich der Befestigung der sanitären Auslaufarmatur erlauben.

Die Ausführungsform der Abbildung 9 der US 4 303 263 A entspricht dem Oberbegriff des Anspruchs 1.

Aus der DE 29 07 813 A1 kennt man bereits eine Schlauchanordnung der eingangs erwähnten Art, die als Hochdruckschlauch-Armatur vorgesehen ist. Die vorbekannte Schlauchanordnung weist einen flexiblen Druckschlauch und ein Anschlussstück auf, das an einem Schlauchende des Druckschlauchs angeordnet ist. Am Anschlussstück ist ein Schlauchnippel vorgesehen, der in das Schlauchende des Druckschlauchs eingreift. Der Druckschlauch ist zwischen dem Schlauchnippel und der Quetschhülse kraft- und formschlüssig gehalten, welche Quetschhülse den Druckschlauch außenseitig umgreift. Die Quetschhülse überragt den Schlauchnippel an dessen schlauchseitigem Nippelende in Erstreckungsrichtung des Druckschlauches mit einem Hülsenabschnitt. Die Quetschhülse weist an ihrem Hülseninnenumfang eine Vielzahl voneinander beabstandeter und ringförmig umlaufender Vorsprünge auf, die widerhakenartig nur ein Aufschieben des Schlauchendes in den zwischen Quetschhülse und Schlauchnippel gebildeten Zwischenraum erlauben -, aber sich einem Abziehen des Schlauchendes aus diesem Zwischenraum entgegenstellen. Diese an der Quetschhülse auch im Bereich des überstehenden Hülsenabschnitts vorgesehenen Vorsprünge bilden radial nach innen gerichtete Ausformungen, die den Druckschlauch über dessen Längserstreckung derart radial beaufschlagen und verdrängen, dass der lichte Innendurchmesser des Druckschlauchs im Bereich des Hülsenabschnitts gegenüber dem lichten Innendurchmesser des entspannten Druckschlauchs an den lichten Innendurchmesser des Schlauchnippels angenähert oder angeglichen ist.

Die aus DE 29 07 813 A1 vorbekannte Hochdruckschlauch-Armatur setzt einen vergleichsweise dicken Druckschlauch aus elastischem Material voraus, der über seine Längserstreckung von außen einwirkende Vorsprünge derart gut auszugleichen vermag, dass sich jedenfalls im Bereich der den Druckschlauch beaufschlagenden Quetschhülse ein nahezu gleichmäßiger lichter Durchflussquerschnitt einstellt. Druckschläuche aber, die eine größere Wandungsdicke und einen demgegenüber kleineren lichten Durchflussquerschnitt aufweisen, sind zwar als Hochdruckschläuche -, aber weniger gut für sanitäre Wasserleitungen geeignet, durch die eine gegebenenfalls auch große Wassermenge pro Zeiteinheit durchfließen soll.

Es ist bekannt, dass die Durchflusseigenschaften einer derartigen Schlauchanordnung durch die Innengeometrie des Schlauchnippels begrenzt wird, so dass der Innendurchmesser des Schlauchnippels häufig derart dimensioniert wird, dass im Anwendungsbereich eine möglichst geringe Behinderung des Durchflusses entsteht.

Der Erfindung liegt die Aufgabe zugrunde, die Durchflusseigenschaften einer Schlauchanordnung zu verbessern.

Zur Lösung dieser Aufgabe ist erfindungsgemäß eine Schlauchanordnung gemäss Anspruch 1 vorgesehen. Von Vorteil ist dabei, dass eine bei den bisher bekannten Schlauchanordnungen notwendig vorhandene sprunghafte Änderung des Innendurchmessers beim Übergang vom Schlauchnippel zum Druckschlauch in ihrer Sprunghöhe reduziert oder in einen mehr oder wenigen glatten Übergang umgewandelt ist. Dies hat zur Folge, dass Verwirbelungen, die bislang an dem stufenförmigen Übergang auftraten und die eine zusätzliche Verminderung des für die Durchströmung dargebotenen effektiven Innenquerschnitts erzeugten, weitestgehend oder ganz vermieden werden kann, so dass der Strömungswiderstand der Schlauchanordnung gegenüber den bekannten Schlauchanordnungen selbst bei gleichbleibendem Innendurchmesser des Schlauchnippels deutlich reduziert werden kann. Dies verbessert die Durchflusseigenschaften erheblich.

Besonders günstig ist es, wenn der Vorsprung entlang des Hülsenabschnitts umlaufend ausgebildet ist. Von Vorteil ist dabei, dass der Druckschlauch allseitig entlang seines Umfangs radial nach innen verdrängt wird, so dass die erwähnte Stufe an der angeströmten Wandung aus Schlauchnippel und Druckschlauch am gesamten Umfang vermindert oder durch Glättung reduziert werden kann.

Der Hülsenabschnitt weist außenseitig eine nutförmige Vertiefung auf, welche in Tiefe und Erstreckung dem innenseitigen Vorsprung entspricht.

Um ein ungewolltes Herausrutschen des Schlauchnippels aus dem Druckschlauch zu vermeiden, kann vorgesehen sein, dass der Schlauchnippel außenseitig Halterippen aufweist, durch welche der Druckschlauch formschlüssig am Schlauchnippel gehalten ist.

Bei einer Ausgestaltung der Erfindung kann vorgesehen sein, dass die Quetschhülse gecrimpt ist. Von Vorteil ist dabei, dass auf einfache Weise die Quetschhülse rutschfest an dem Druckschlauch befestigbar ist und dass der Druckschlauch auf dem Schlauchnippel form- oder kraftschlüssig gehalten werden kann, so dass die Quetschhülse mit dem erfindungsgemäßen Vorsprung relativ zu dem Schlauchnippel fixierbar ist.

Um eine definierte Positionierung des erfindungsgemäßen Vorsprungs in Bezug auf das Nippelende des Schlauchnippels zu erreichen, kann vorgesehen sein, dass der Schlauchnippel außenseitig einen Kragen aufweist, welcher einen axialen Anschlag für den aufgesteckten Druckschlauch und/oder die Quetschhülse bildet.

Alternativ oder zusätzlich kann vorgesehen sein, dass die Quetschhülse das Schlauchende stirnseitig übergreift und einen axialen Anschlag für den in der Quetschhülse aufgenommenen Druckschlauch bildet.

Hierbei und in der übrigen Beschreibung werden die Begriffe "axial" und "radial" in Bezug auf die im Wesentlichen rohroder zylinderförmige Quetschhülse und den im Wesentlichen rohroder zylinderförmigen Schlauchnippel verstanden.

Es kann vorgesehen sein, dass der lichte Innendurchmesser des Druckschlauches im Bereich des Vorsprungs auf ein Maß reduziert ist, welches kleiner als ein minimaler Außendurchmesser des Schlauchnippels ist. Von Vorteil ist dabei, dass die verbleibende Stufe in der angeströmten Wandung der Schlauchanordnung besonders reduziert ist.

Die Entstehung von Wirbeln kann weitestgehend vermieden werden, wenn der Vorsprung den Druckschlauch derart radial nach innen verdrängt, dass der minimale lichte Innendurchmesser des Druckschlauchs höchstens gleich oder sogar genau gleich dem Innendurchmesser des Schlauchnippels ist.

Bei einer Ausgestaltung der Erfindung kann vorgesehen sein, dass der Druckschlauch einlagig ausgebildet ist. Hierbei kann die Lage des Druckschlauchs aus einem Verbundwerkstoff oder aus einem homogenen Material gefertigt sein. Von Vorteil ist dabei, dass der außenseitig den Druckschlauch beaufschlagende Vorsprung in besonders günstiger Weise eine innenseitige Einschnürung des lichten Innenquerschnitts oder Innenprofils des Druckschlauchs bewirkt.

Die Erfindung wird nun anhand eines Ausführungsbeispiels näher beschrieben, ist jedoch nicht auf dieses Ausführungsbeispiel beschränkt. Weitere Ausführungsbeispiele ergeben sich durch Kombination einzelner oder mehrerer Merkmale der Schutzansprüche untereinander und/oder mit einzelnen oder mehreren Merkmalen des Ausführungsbeispiels.

Es zeigt
- Fig. 1: eine Schlauchanordnung nach dem Stand der Technik in einer teilweise aufgeschnittenen Darstellung,
- Fig. 2: eine erfindungsgemäße Schlauchanordnung in einer teilweiser aufgeschnittener Darstellung und
- Fig. 3: den Einfluss der Ausbildung des erfindungsgemäßen Vorsprungs auf die Durchströmungseigenschaften der erfindungsgemäßen Schlauchanordnung in einer Axialschnittdarstellung.

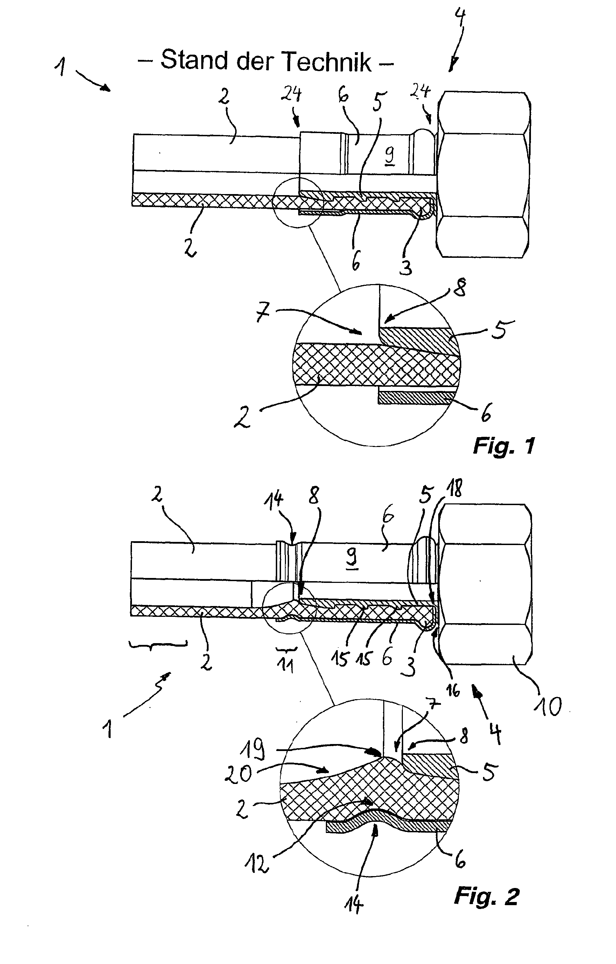

Fig. 1 zeigt eine im Ganzen mit 1 bezeichnete Schlauchanordnung einer bekannten Ausführung.

Die Schlauchanordnung 1 hat einen flexiblen Druckschlauch 2, bei welchem an einem Schlauchende 3 ein Anschlussstück 4 befestigt ist. Das Anschlussstück 4 dient dem Anschluss des Druckschlauchs 2 an ein nicht weiter dargestelltes wasserführendes System.

Zur Verbindung des Anschlussstücks 4 mit dem Druckschlauch 2 weist das Anschlussstück 4 einen Schlauchnippel 5 und eine Quetschhülse 6 auf, welche gemeinsam das Schlauchende 3 zwischen sich aufnehmen und formschlüssig halten.

Da der Schlauchnippel 5 in den Druckschlauch 2 eingreift, ist der lichte Innendurchmesser des Schlauchnippels 5 notwendig kleiner als der lichte Innendurchmesser des Druckschlauches 2, so dass eine Stufe 7 in der Innenwandung der Schlauchanordnung 1 auf der axialen Höhe des Nippelendes 8 ausgebildet ist. Die Stufung 7 ist in einer Detailvergrößerung in Fig. 1 genauer dargestellt.

Die Quetschhülse 6 ist in einem von ihren axialen Enden 24 beabstandeten Crimpabschnitt 8 gecrimpt, und die axiale Länge der Quetschhülse 6 ist höchstens so lang gewählt, dass der Schlauchnippel 5 außenseitig durch die Quetschhülse 6 überdeckt ist.

Die in Fig. 2 dargestellte erfindungsgemäße Schlauchanordnung 1 weist ebenfalls einen flexiblen Druckschlauch 2 und ein am Schlauchende 3 befestigtes Anschlussstück 4 auf, wobei das Anschlussstück 4 einen in den Druckschlauch 2 eingreifenden Schlauchnippel 5 und eine den Druckschlauch 2 außenseitig umgreifende Quetschhülse 6 aufweist.

Das Anschlussstück 4 ist in Fig. 2 zur Illustration mit einer Anschlussmutter 10 dargestellt. Bei weiteren Ausführungsbeispielen ist an dem Anschlussstück 4 und insbesondere am Schlauchnippel 5 zur Verbindung mit einem wasserführenden System ein Außengewinde oder ein Mittel für eine Steck-, Rast-oder Schraubverbindung ausgebildet.

Erfindungsgemäß ist bei der Schlauchanordnung 1 gemäß Fig. 2 im Gegensatz zu der bekannten Schlauchanordnung 1 gemäß Fig. 1 die Quetschhülse 6 derart verlängert ausgeführt, dass sie den Schlauchnippel 5 an dessen schlauchseitigem Nippelende 8 in Erstreckungsrichtung des Druckschlauchs 2 oder längs des Druckschlauches 2 mit einem Hülsenabschnitt 11 axial überragt.

Innenseitig bildet die Quetschhülse 6 in dem Hülsenabschnitt 11 einen Vorsprung 12, der in der Detailvergrößerung in Fig. 2 näher ersichtlich ist.

Dieser Vorsprung 12 ist radial nach innen gerichtet und entlang des Hülsenabschnitts 11 umlaufend ringförmig ausgebildet.

Der Vorsprung 12 beaufschlagt den Druckschlauch 2 im Hülsenabschnitt 11 radial und verdrängt so Material des Druckschlauchs 2 radial nach innen.

Dies hat zur Folge, dass der lichte Innendurchmesser des Druckschlauchs 2 im Bereich des Hülsenabschnitts 11 gegenüber dem lichten Innendurchmesser des entspannten Druckschlauchs 2, der beispielsweise in dem freien Schlauchabschnitt 13 vorliegt, reduziert ist. Somit gleicht sich der lichte Innendurchmesser des Druckschlauchs 2 nahe dem Nippelende 8 an den lichten Innendurchmesser des Schlauchnippels 5 derart an, dass die Stufe 7 beim Übergang vom Schlauchnippel 5 zum Druckschlauch 2 in ihrer Höhe deutlich reduziert ist.

Gemäss Fig. 2 ist der Vorsprung 12 an der Quetschhülse 6 dadurch ausgebildet, dass die Quetschhülse 6 profiliert wurde. Durch diese Profilierung wurde an der Quetschhülse 6 im Hülsenabschnitt 11 eine ringförmig umlaufende Nut 14 eingebracht, deren Nuttiefe der Höhe des Vorsprungs 12 vorgibt.

An dem Schlauchnippel 5 sind außenseitig ringförmig umlaufende Halterippen 15 ausgebildet, welche sich in das Material des Druckschlauchs 2 eingraben und so ein Herausrutschen des Schlauchnippels 5 aus dem Schlauchende 3 verhindern.

Hierzu wird die Quetschhülse 6 in einem sich bis zum schlauchseitigen Nippelende 8 des Schlauchnippels 5 erstreckenden Crimpabschnitt 9 gecrimpt, wodurch der Druckschlauch 2 gegen die Halterippen 15 radial nach innen gepresst wird. Dadurch, dass sich die Quetschhülse 6 erfindungsgemäß über den Schlauchnippel 5 hinaus erstreckt, ist die volle axiale Länge des Schlauchnippels 5 für die Crimpverbindung nutzbar.

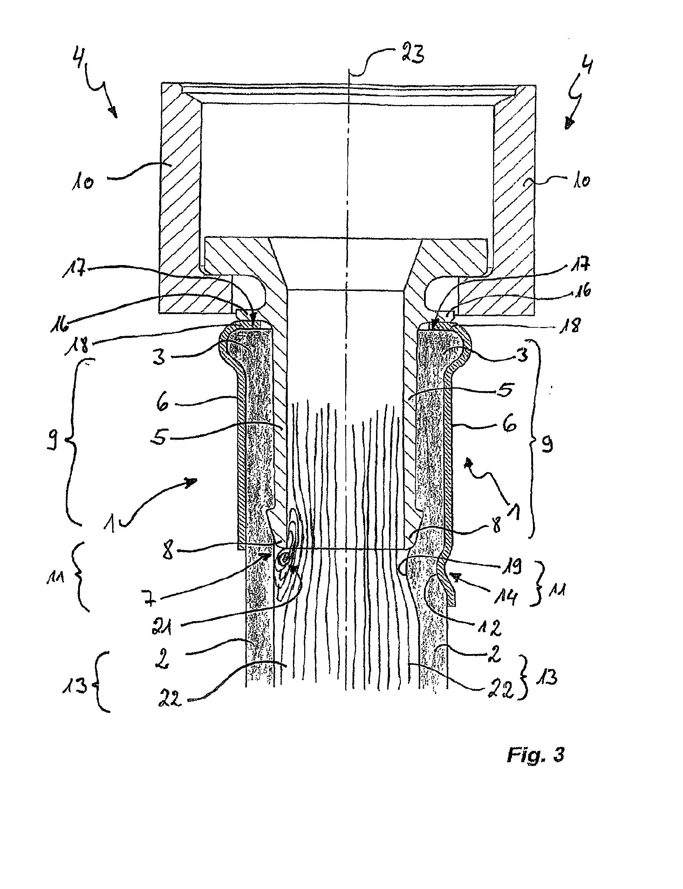

Die Quetschhülse 6 übergreift das Schlauchende 3 an dessen Stirnseite 17 (vgl. Fig. 3) und bildet somit einen axialen Anschlag 18 für das Schlauchende 3.

Am Schlauchnippel 5 ist außenseitig ein ringförmig umlaufender Kragen 16 ausgebildet, welcher einen axialen Anschlag für die Quetschhülse 6 und für den Druckschlauch 2 bildet.

Somit kann eine definierte Position des Vorsprungs 12 in Bezug auf den eingesteckten Schlauchnippel 5 eingestellt werden.

Der Kragen 16 dient außerdem der Führung der Anschlussmutter 10 beim Aufschrauben auf ein Gegenanschlussstück.

Durch den Vorsprung 12 wird das Material des flexiblen Druckschlauchs 2 derart nach innen verformt, dass sich eine Einschnürung 19 ausbildet, in welcher der lichte Innendurchmesser des Druckschlauchs 2 einen minimalen Wert annimmt.

Hierbei ist der Vorsprung 12 dem Nippelende 8 derart weit vorgelagert, dass die Einschnürung 19 zu dem Nippelende 8 in Erstreckungsrichtung des Druckschlauchs 2 axial beabstandet ist.

Wie in der Detailvergrößerung von Fig. 2 näher ersichtlich ist, bildet die Einschnürung 19 eine Flanke 20 mit zum Nippelende 8 hin kontinuierlich abnehmendem lichten Innendurchmesser, so dass die Stufe 7 gegenüber dem bekannten Stand der Technik nach Fig. 1 geglättet und im Wesentlichen beseitigt ist. Zwischen der Einschnürung 19 des lichten Innenprofils und dem Schlauchnippel 5 nimmt der lichte oder freie Innenquerschnitt in Längsrichtung kurz wieder zu, so dass die Profileinschnürung 19 ein Minimum des freien Querschnitts definiert.

Bei dem Ausführungsbeispiel gemäß Fig. 2 ist der lichte Innendurchmesser des Druckschlauchs 2 im Bereich des Vorsprungs 12 nicht nur auf ein Maß reduziert, welches kleiner als der minimale Außendurchmesser des Schlauchnippels 5 ist, sondern der Vorsprung 12 verdrängt den Druckschlauch 2 sogar derart radial nach innen, dass der minimale lichte Innendurchmesser des Druckschlauchs 2 an der Einschnürung 19 gleich dem Innendurchmesser des Schlauchnippels 5 ist. Somit ragt der Vorsprung 12 nicht nur radial in den Erstreckungsbereich des Schlauchnippels 5 hinein, sondern schließt radial mit der Innenseite des Schlauchnippels 5 ab.

Die Erhebung des Vorsprungs 12 wird im Ausführungsbeispiel dadurch besonders gut in der Einschnürung 19 abgebildet, dass der Druckschlauch 2 einlagig ausgebildet ist.

Fig. 3 zeigt den Einfluss des erfindungsgemäßen Vorsprungs 12 auf die Strömungseigenschaften in der Schlauchanordnung 1 gemäß Fig. 2.

Hierbei sind funktionell oder konstruktiv gleiche Bauteile und Merkmale mit denselben Bezugszeichen bezeichnet und nicht noch einmal gesondert beschrieben.

In Fig. 3 zeigt die linke Hälfte die Situation, die sich ohne den erfindungsgemäßen Vorsprung 12 einstellt.

Die rechte Hälfte gibt dagegen die Strömungsverhältnisse bei ausgebildetem Vorsprung 12 wieder.

In der linken Hälfte von Fig. 3 ist ersichtlich, dass das durchströmende Medium an der Stufung 7 einen Wirbel 21 ausbildet, durch welchen die Strömungslinien 22 radial nach innen zur Mitte 23 verdrängt werden. Hierdurch wird der effektive Querschnitt am Übergang zwischen Schlauchnippel 5 und Druckschlauch 2 deutlich verringert.

Der Wirbel 21 bildet sich unabhängig von der Durchströmungsrichtung aus, also unabhängig davon, ob das Medium in der Schlauchanordnung 1 in Fig. 1 von oben nach unten oder von unten nach oben strömt.

In der rechten Hälfte von Fig. 3 ist ersichtlich, dass durch den Vorsprung 12 in der Quetschhülse 6 das Material des Druckschlauchs 2 radial nach innen verdrängt wird, wodurch innenseitig am Druckschlauch 2 in unmittelbarer Nachbarschaft zu dem Nippelende 8 eine Einschnürung 19 des Innendurchmessers und damit des lichten Innenprofils ausgebildet wird.

Diese Profileinschnürung 19 schafft einen geglätteten Übergang zwischen dem Schlauchnippel 5 und dem entspannten Druckschlauch 2, welcher in dem freien Schlauchabschnitt 13 vorliegt.

Durch diesen geglätteten Übergang wird die Stufung 7 nahezu vollständig beseitigt, so dass im Wesentlichen keine Wirbel 21 auftreten, sondern die Strömungslinien 22 eine im Wesentlichen ungehinderte laminare Strömung anzeigen.

Auf diese Weise kann der vom Schlauchnippel 5 bereitgestellte lichte Innendurchmesser optimal ausgenutzt werden, und der Strömungswiderstand der Schlauchanordnung 1 ist gegenüber der Situation ohne erfindungsgemäßen Vorsprung 12 (linke Bildhälfte) deutlich reduziert.

Bei der Schlauchanordnung 1 für ein wasserführendes System, welche einen flexiblen Druckschlauch 2 und ein Anschlussstück 4 mit einem Schlauchnippel 5 und einer Quetschhülse 6, welche den Druckschlauch 2 zwischen sich aufnehmen, aufweist, wird vorgeschlagen, dass die Quetschhülse 6 in einem den Schlauchnippel 5 axial überragenden Hülsenabschnitt 11 einen nach innen abstehenden Vorsprung 12 aufweist, durch welchen der Druckschlauch 2 hinter dem Schlauchnippel 5 radial nach innen zur Bildung einer Einschnürung 19 des Innendurchmessers verdrängt wird, so dass der Übergang der Innendurchmesser zwischen dem Schlauchnippel 5 und dem Druckschlauch 2 geglättet wird.

## Patentansprüche

1. Schlauchanordnung (1) für ein wasserführendes System, mit einem flexiblen Druckschlauch (2) und einem an einem Schlauchende (3) des Druckschlauchs (2) angeordneten Anschlussstück (4), wobei das Anschlussstück (4) zumindest einen in den Druckschlauch (2) eingreifenden Schlauchnippel (5) und eine den Druckschlauch (2) außenseitig umgreifende Quetschhülse (6) aufweist, wobei der Druckschlauch (2) zwischen dem Schlauchnippel (5) und der Quetschhülse (6) kraft- und/oder formschlüssig gehalten ist, wobei die Quetschhülse (6) den Schlauchnippel (5) an dessen schlauchseitigem Nippelende (8) in Erstreckungsrichtung des Druckschlauches (2) mit einem Hülsenabschnitt (11) überragt, und wobei die Quetschhülse (6) in dem Hülsenabschnitt (11) einen radial nach innen gerichteten Vorsprung (12) bildet, welcher den Druckschlauch (12) derart radial beaufschlagt und verdrängt, dass der lichte Innendurchmesser des Druckschlauches (2) im Bereich des Hülsenabschnitts (11) gegenüber dem lichten Innendurchmesser des entspannten Druckschlauchs (2) an den lichten Innendurchmesser des Schlauchnippels (5) angenähert oder angeglichen ist, wobei die Quetschhülse (6) eine durch Vercrimpung der Quetschhülse (6) erzeugte Profilierung aufweist, wobei durch diese Profilierung im Hülsenabschnitt (11) der Quetschhülse (6) außenumfangsseitig eine ringförmig umlaufende Nut (14) eingebracht ist, deren Nuttiefe die Höhe des innenumfangsseitig gebildeten Vorsprungs (12) vorgibt, wobei der Vorsprung (12) das Material des flexiblen Druckschlauchs (2) derart nach innen verformt, dass sich eine Einschnürung (19) ausbildet, in welcher der lichte Innendurchmesser des Druckschlauchs (2) einen minimalen Wert annimmt, **dadurch gekennzeichnet, dass** die Einschnürung (19) zu dem Nippelende (8) in Erstreckungsrichtung des Druckschlauchs (2) axial beabstandet ist.

2. Schlauchanordnung (1) nach Anspruch 1, **dadurch gekennzeichnet, dass** der Vorsprung (12) entlang des Hülsenabschnitts (11) umlaufend ausgebildet ist.

3. Schlauchanordnung (1) nach einem der Ansprüche 1 bis 2, **dadurch gekennzeichnet, dass** der Schlauchnippel (5) außenseitig Halterippen (15) aufweist, durch welche der Druckschlauch (2) formschlüssig am Schlauchnippel (5) gehalten ist.

4. Schlauchanordnung (1) nach einem der Ansprüche 1 bis 3, **dadurch gekennzeichnet, dass** der Schlauchnippel (5) außenseitig einen Kragen (16) aufweist, welcher einen Anschlag für den aufgesteckten Druckschlauch (2) und/oder die Quetschhülse (6) bildet.

5. Schlauchanordnung (1) nach einem der Ansprüche 1 bis 4, **dadurch gekennzeichnet, dass** die Quetschhülse (6) das Schlauchende (3) stirnseitig übergreift und einen Anschlag (18) für den in der Quetschhülse (6) aufgenommenen Druckschlauch (2) bildet.

6. Schlauchanordnung (1) nach einem der Ansprüche 1 bis 5, **dadurch gekennzeichnet, dass** der lichte Innendurchmesser des Druckschlauchs (2) im Bereich des Vorsprungs (12) auf ein Maß reduziert ist, welches kleiner als ein minimaler Außendurchmesser des Schlauchnippels (5) ist.

7. Schlauchanordnung (1) nach einem der Ansprüche 1 bis 6, **dadurch gekennzeichnet, dass** der Vorsprung (12) den Druckschlauch (2) derart radial nach innen verdrängt, dass der minimale lichte Innendurchmesser des Druckschlauchs (2) höchstens gleich oder sogar genau gleich dem lichten Innendurchmesser des Schlauchnippels (5) ist.

8. Schlauchanordnung (1) nach einem der Ansprüche 1 bis 7, **dadurch gekennzeichnet, dass** der Druckschlauch (2) einlagig ausgebildet ist.

## Claims

1. Hose arrangement (1) for a water-conveying system, having a flexible pressure hose (2) and a connection piece (4) arranged on one hose end (3) of the pressure hose (2), the connection piece (4) having at least one hose nipple (5) which engages in the pressure hose (2), and a ferrule (6) which engages around the pressure hose (2) on the outside, the pressure hose (2) being held in a non-positive and/or positive manner between the hose nipple (5) and the ferrule (6), the ferrule (6) projecting with a sleeve portion (11) over the hose nipple (5) at the hose-side nipple end (8) of said nipple in the direction of extension of the pressure hose (2), and the ferrule (6) forming, in the sleeve portion (11), a radially inwardly directed protrusion (12) which radially acts on and displaces the pressure hose (12) such that the clear inside diameter of the pressure hose (2) in the region of the sleeve portion (11) is close to or equal to the clear inside diameter of the hose nipple (5) compared to the clear inside diameter of the relaxed pressure hose (2), the ferrule (6) having profiling produced by crimping of the ferrule (6), wherein as a result of said profiling in the sleeve portion (11) of the ferrule (6) on the outer circumferential side an annularly encircling groove (14) is introduced, the groove depth of which predefines the height of the protrusion (12) formed on the inner circumferential side, the protrusion (12) deforming the material of the flexible pressure hose (2) inwards such that a constriction (19) is formed in which the clear inside diameter of the pressure hose (2) assumes a minimum value, **characterised in that** the constriction (19) is spaced apart axially from the nipple end (8) in the direction in which the pressure hose (2) extends.

2. Hose arrangement (1) as claimed in claim 1, **characterised in that** the protrusion (12) is formed in an encircling manner along the sleeve portion (11).

3. Hose arrangement (1) as claimed in any one of claims 1 to 2, **characterised in that** the hose nipple (5) has, on the outside, holding ribs (15) by which the pressure hose (2) is held on the hose nipple (5) in a positive manner.

4. Hose arrangement (1) as claimed in any one of claims 1 to 3, **characterised in that** the hose nipple (5) has, on the outside, a collar (16) which forms a stop for the plugged-on pressure hose (2) and/or the ferrule (6).

5. Hose arrangement (1) as claimed in any one of claims 1 to 4, **characterised in that** the ferrule (6) engages at its end face over the hose end (3) and forms a stop (18) for the pressure hose (2) received in the ferrule (6).

6. Hose arrangement (1) as claimed in any one of claims 1 to 5, **characterised in that** the clear inside diameter of the pressure hose (2) is reduced in the region of the protrusion (12) to a dimension which is smaller than a minimum outside diameter of the hose nipple (5).

7. Hose arrangement (1) as claimed in any one of claims 1 to 6, **characterised in that** the protrusion (12) displaces the pressure hose (2) radially inward such that the minimum clear inside diameter of the pressure hose (2) is at most equal to, or even exactly equal to, the clear inside diameter of the hose nipple (5).

8. Hose arrangement (1) as claimed in any one of claims 1 to 7, **characterised in that** the pressure hose (2) is formed in a single layer.

## Revendications

1. Ensemble de tuyau flexible (1) pour un système de transport d'eau, avec un tuyau flexible résistant à la pression (2) et une pièce de raccordement (4) disposée à une extrémité (3) du tuyau flexible résistant à la pression (2), dans lequel la pièce de raccordement (4) présente au moins un mamelon de tuyau flexible (5) engagé dans le tuyau flexible résistant à la pression (2) et une douille d'écrasement (6) entourant extérieurement le tuyau flexible résistant à la pression (2), dans lequel le tuyau flexible résistant à la pression (2) est maintenu par adhérence et/ou par emboîtement entre le mamelon de tuyau flexible (5) et la douille d'écrasement (6), dans lequel la douille d'écrasement (6) dépasse avec une partie de douille (11) dans la direction d'extension du tuyau flexible résistant à la pression (2), le mamelon de tuyau flexible (5), à l'extrémité de mamelon (8) de celui-ci côté tuyau flexible, et dans lequel la douille d'écrasement (6) forme dans la partie de douille (11) une saillie (12) orientée radialement vers l'intérieur, qui écrase et refoule le tuyau flexible résistant à la pression (2) radialement vers l'intérieur, de telle manière que le diamètre intérieur libre du tuyau flexible résistant à la pression (2) dans la région de la partie de douille (11) par rapport au diamètre intérieur libre du tuyau flexible résistant à la pression (2) détendu soit proche ou égal au diamètre intérieur libre du mamelon de tuyau flexible (5), dans lequel la douille d'écrasement (6) présente un profilage produit par un sertissage de la douille d'écrasement (6), dans lequel ce profilage imprime extérieurement dans la partie de douille (11) de la douille d'écrasement (6), une gorge périphérique annulaire (14), dont la profondeur de gorge détermine la hauteur de la saillie formée intérieurement (12), dans lequel la saillie (12) déforme la matière du tuyau flexible résistant à la pression (2) vers l'intérieur, de telle manière qu'il se forme un étranglement (19) dans lequel le diamètre intérieur libre du tuyau flexible résistant à la pression (2) prend une valeur minimale, **caractérisé en ce que** l'étranglement (19) est axialement espacé de l'extrémité de mamelon (8) dans la direction d'extension du tuyau flexible résistant à la pression (2).

2. Ensemble de tuyau flexible (1) selon la revendication 1, **caractérisé en ce que** la saillie (12) est formée en périphérie le long de la partie de douille (11).

3. Ensemble de tuyau flexible (1) selon l'une des revendications 1 à 2, **caractérisé en ce que** le mamelon de tuyau flexible (5) présente extérieurement des stries de maintien (15), par lesquelles le tuyau flexible résistant à la pression (2) est maintenu par emboîtement sur le mamelon de tuyau flexible (5).

4. Ensemble de tuyau flexible (1) selon l'une quelconque des revendications 1 à 3, **caractérisé en ce que** le mamelon de tuyau flexible (5) présente extérieurement un collet (16), qui forme une butée pour le tuyau flexible résistant à la pression (2) engagé et/ou la douille d'écrasement (6).

5. Ensemble de tuyau flexible (1) selon l'une quelconque des revendications 1 à 4, **caractérisé en ce que** la douille d'écrasement (6) recouvre frontalement l'extrémité de tuyau flexible (3) et forme une butée (18) pour le tuyau flexible résistant à la pression (2) engagé dans la douille d'écrasement (6).

6. Ensemble de tuyau flexible (1) selon l'une quelconque des revendications 1 à 5, **caractérisé en ce que** le diamètre intérieur libre du tuyau flexible résistant à la pression (2) est réduit dans la région de la saillie (12) à une dimension qui est plus petite qu'un diamètre extérieur minimal du mamelon de tuyau flexible (5).

7. Ensemble de tuyau flexible (1) selon l'une quelconque des revendications 1 à 6, **caractérisé en ce que** la saillie (12) refoule le tuyau flexible résistant à la pression (2) radialement vers l'intérieur, de telle manière que le diamètre intérieur libre minimal du tuyau flexible résistant à la pression (2) soit au maximum égal ou même exactement égal au diamètre intérieur libre du mamelon de tuyau flexible (5).

8. Ensemble de tuyau flexible (1) selon l'une quelconque des revendications 1 à 7, **caractérisé en ce que** le tuyau flexible résistant à la pression (2) est réalisé en une seule couche.
